# EUROPÄISCHE PATENTSCHRIFT

(11) **EP 0 833 464 B1**
(45) Veröffentlichungstag und Bekanntmachung des Hinweises auf die Patenterteilung: **26.04.2006**
(21) Anmeldenummer: 97116895.0
(22) Anmeldetag: 29.09.1997
(51) Int. Cl.: H04B 7/26

(54) **Verfahren zur Erhöhung der Reichweite in einem Zeitschlitzverfahren**
Method of coverage extension in a TDMA system
Procédé d'extension de la portée dans un système TDMA

(30) Priorität: 30.09.1996 DE 19640217
(43) Veröffentlichungstag der Anmeldung: 01.04.1998
(73) Patentinhaber: Infineon Technologies AG, 81669 München (DE)
(72) Erfinder: Boetzel, Ulrich, 41564 Kaarst (DE); Hütwohl, Michael, 45239 Essen (DE); Österreicher, Johannes, 2500 Baden (AT)
(74) Vertreter: Graf Lambsdorff, Matthias

(56) Entgegenhaltungen:
- EP-A- 0 564 429
- WO-A-95/35603
- WO-A-96/07250
- US-A- 5 541 979

## Beschreibung

Die Erfindung betrifft ein Verfahren zur Erhöhung der Reichweite in einem Zeitschlitzverfahren.

Zeitschlitzverfahren kommen beispielsweise bei schnurlosen Telekommunikationssystemen auf der Basis einer digitalen Übertragungstechnik zum Tragen. Diese Telekommunikationssysteme verwenden als Zugriff auf das Spektrum ein Time-Devision-Multiple-Access(TDMA)-Verfahren. Die Erfindung ist für DECT (Digital Enhanced Cordless Telecommunications) Standard verwendbar.

Im DECT TDMA-System mit Full-Slots werden 24 Zeitschlitze (Full-Slots) in 20 ms mit je 480 Bit untergebracht. Ein Zeitschlitz beinhaltet 424 Datenbits und 56 Bits Schutzzeit. Die 56 Bits Schutzzeit können für eine Laufzeit des Signals in der Luft genutzt werden und werden damit direkt in die Reichweite zwischen Sender und Empfänger umgesetzt.

Eine Möglichkeit zur Erhöhung der Reichweite wird in der Second Edition des DECT-Standards im Timing-Advance beschrieben. Hierbei empfängt und sendet ein Mobilteil die Zeitschlitze nicht durch exakt 5 ms getrennt, sondern schiebt diese zeitlich auf weniger als 5 ms zusammen und gleicht damit größere Laufzeiten auf der Luftstrecke aus. Hierzu ist jedoch ein zusätzlicher Protokollaufwand und ein entsprechendes Leistungsmerkmal des Mobilteils notwendig.

Die Druckschrift WO 95/35603 A beschreibt eine Anordnung für ein Funksystem kurzer Reichweite, bei welcher zwischen einer Basisstation und einer Mobilstation ein Repeater angeordnet ist, welcher von der Basisstation eine Nachricht empfängt und die Nachricht zu der betreffenden Mobilstation weiterleitet.

In dem Repeater wird in einem Rahmen ein Sendezeitschlitz mit Mobilteilfunktionalität zeitlich verschoben.

Die Aufgabe der Erfindung ist es, ein Verfahren anzugeben, durch das die Reichweite zwischen Sender und Empfänger vergrößert werden kann und gleichzeitig die 5 ms Zeitdauer an der Antenne von Empfangs- zu Sendezeitschlitzen erhalten bleibt.

Die Aufgabe wird durch ein Verfahren gemäß dem Patentanspruch 1 gelöst.

Vorteilhafte Weiterbildungen ergeben sich aus den abhängigen Ansprüchen.

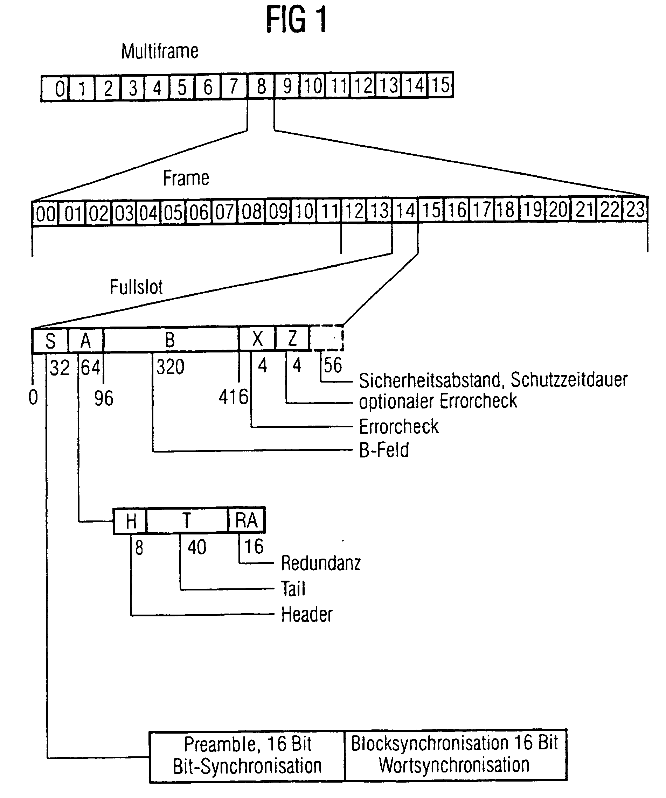

Die Erfindung wird im folgenden anhand der Figuren 1 bis 3 weiter erläutert.

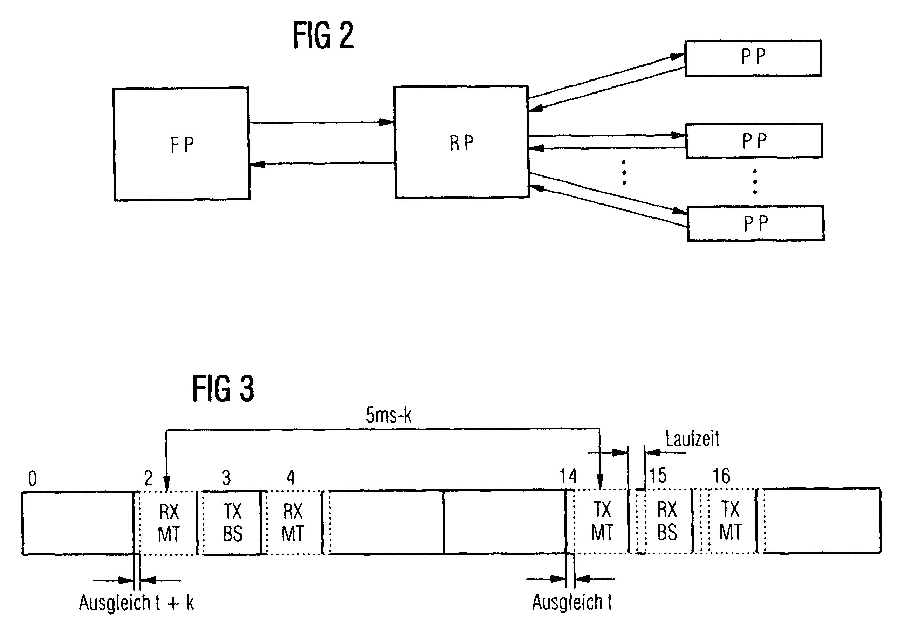

Die Figur 3 zeigt einen Rahmen (Frame) in den beispielhaft mehrere Sende- und Empfangszeitschlitze eingezeichnet sind. In dem in Figur 3 gezeigten Fall stellt der Slot 2 einen Empfangszeitschlitz RX mit Mobilteilfunktionalität MT dar. Slot 3 ist ein Sendezeitschlitz TX mit Basisstationsfunktionalität BS. Slot 4 entspricht Slot 2. Die Slots 14 und 16 sind Sendezeitschlitze TX mit Mobilteilfunktionalität MT. Slot 15 schließlich ist ein Empfangszeitschlitz mit Basisstationsfunktionalität BS. Die Slots 2 und 14 bzw. 3 und 15 bzw. 4 und 16 bilden jeweils einen Kanal (Verbindung). Die DECT-Rahmenstruktur ist in Figur 1 gezeigt. Ein Multiframe beinhaltet 16 Frames. Ein Frame, auch als Rahmen bezeichnet, hat eine Rahmenzeitdauer von 10 ms, was 11520 Bits entspricht. Der Frame ist in 2 x 12 gleichgroße Full-Slots, im folgenden auch als Slots oder Zeitschlitze bezeichnet, aufgeteilt. Diese sind in Figur 1 mit 00, 01, 02,...23 bezeichnet. Die Basisstation, auch als Fixpart FP bezeichnet, sendet an einen Repeaters RP, der wiederum an die Mobilteile, auch als Handgerät oder Portibleparts PP bezeichnet, sendet. Umgekehrt senden die Portibleparts PP an den Repeater RP, der wiederum zur Basisstation FP sendet.

Jeder Zeitschlitz dauert 416 ms, was 480 Bits entspricht. Ein Zeitschlitz ist aufgeteilt in ein 32 Bit breites Synchronisationsfeld S, nachfolgend auch Sync-Feld genannt, ein 64 Bit breites A-Feld, das zur Signalisierung dient, ein 320 Bit breites B-Feld, das die Sprachdaten enthält, ein 4 Bit breites X-Feld, ein 4 Bit breites Z-Feld und ein etwa 50 µs (56 Bit) andauerndes Sicherheitsfeld, das auch als Guardspace oder Schutzzeitdauer bezeichnet wird.

Das X-Feld dient dem Errorcheck über 84 Bits im B-Feld, wenn das B-Feld ungeschützt ist. Das Z-Feld ist ein optionaler Errorcheck, erreicht durch Verdoppelung des X-Felds.

Das S-Feld ist unterteilt in 16 Bits zur Bit-Synchronisation und weiteren 16 Bits zur Wort-Synchronisation.

Das A-Feld besteht aus einem Header H (8 Bit), einem Tail T (40 Bit) und der 16 Bit langen Redundanz. Weitere Einzelheiten der DECT-Rahmenstruktur können im European Telecommunication-Standard EPS 300175-2 und EPS 300175-3 nachgelesen werden.

Im Mobilteil PP sind 5 ms zwischen Empfang und Senden, gemessen an der Antenne, eingestellt. Das Signal erhält über die Laufstrecke eine Verzögerung von n µs, je nach Entfernung zwischen Mobilteil PP und Repeater RP bzw. Repeater RP und Basisstation FP.

Aus diesem Grund kann der Empfang in den Empfangszeitschlitzen RX abhängig von der Entfernung unterschiedliche Zeitpunkte annehmen.

Der für die Reichweite eines Repeaters kritische Fall tritt bei dem Aufeinanderfolgen eines Empfangsslots RX mit Basisstationsfunktionalität BS -mit Laufzeit behaftet- und einem direkt darauffolgenden Sendezeitschlitz PX im Mobilteilmodus MT auf. Aufgrund der DECT-Vorschrift wird der Sender für den Sende-Slot bereits 12 Bits vor den ersten Datenbit angesteuert. Damit reduziert sich die Schutzzeit von 56 Bits um 12 Bits auf 44 Bits, in der eine neue Frequenz vom Hochfrequenzteil (HF-Teil) gesucht werden kann. Wird die Einschwingzeit des HF-Teils mit 20 Bits angesetzt, so wäre mit dieser Zeitschlitz-Konfiguration die erzielbare Reichweite auf (42-20 Bits) x 868 ns/Bit x 300.000 km/s/2 = 2,8 km begrenzt.

In dem der Sendezeitschlitz TX im Mobilteilmodus MT um einen Ausgleichswert t verschoben wird, kann eine zusätzliche Reichweite gewonnen. Ein Repeater weist im Sinne von Basis- und Mobilstation die Möglichkeit auf, in allen 24 Zeitschlitzen eines Rahmens sowohl empfangen als auch Senden zu können. D.h. auf einen Empfangszeitschlitz RX kann unmittelbar darauf ein Sendezeitschlitz TX folgen, dem wiederum ein Empfangszeitschlitz RX folgen kann. Da der Repeater RT sowohl die Basisstationsfunktionalität als auch die Mobilteilfunktionalität gewährleisten muß, muß der zeitlich korrekte Abflauf der Zeitschlitze sichergestellt werden.

In der Fig. 3 ist ein Rahmen mit Sendezeitschlitzen TX und Empfangszeitschlitzen RX dargestellt und die Wirkungsweise des erfindungsgemäßen Verfahrens wird anhand dieser Fig. 3 wie folgt erläutert. Ein Timer (Bitcounter) gibt das Haupttiming des Repeaters RP vor. Dieser Timer wird im folgenden als Referenzbitcounter (= Referenzbitzähler oder Referenzzähler) bezeichnet. Hiervon werden die Sendezeitpunkte der Sendezeitschlitze TX abgeleitet. Die Sendezeitschlitze TX im Basisstationsmodus BS werden mit dem Nulldurchgang des Referenzbitcounters gesendet. Damit können die 12 Zeitschlitze später empfangenen Zeitschlitze RX zum Zeitpunkt 5 ms plus zweimal Laufzeit erwartet werden. Die Sendezeitschlitze TX im Mobilteilmodus MT werden, bezogen auf den Nulldurchgang des Referenzbitcounters, um eine Bitanzahl t später gesendet. Der Referenzbitcounter wird durch die Empfangszeitschlitze RX im Mobilteilmodus MT so synchronisiert, daß das Bit mit der Bitnummer 0 des empfangenen Zeitschlitzes RX bei Bitnummer t+k des Referenzbitcounters zu liegen kommt. Mit k wird die Kompensation der HF-Durchlaufzeit bezeichnet. Der Wert k kann beispielsweise 6 Bit annehmen. Durch die Verschiebung der Sendezeitschlitze TX im Mobilteilmodus MT um den Ausgleichswert t wird zusätzliche Reichweite gewonnen. Der Ausgleichswert t bestimmt sich aus dem Übergang des Zeitschlitzes mit der Zeitschlitznummer 23 (Sendezeitschlitz im Mobilteilmodus) auf den Zeitschlitz mit der Zeitschlitznummer 0 (Sendezeitschlitz im Basisstationsmodus) des darauffolgenden Rahmens. Der Maximalwert von t ergibt sich zu 56-2 x 12-20 = 12 Bits. Bei einem Ausgleichswert t = 12 Bits kann somit eine Reichweite von 12 x 0,868 x 0,2 : 2 km = 1,6 km gewonnen werden. Somit ist durch diese Maßnahme eine Erhöhung der Reichweite des Repeaters RP um ca. 50 % möglich. Gleichzeitig können die durch die Laufzeit durch die HF-Teile erzeugten Verzögerungen ausgeglichen werden.

DECT fordert an der Antenne für das Mobilteil MT einen Abstand von 5 ms zwischen Empfang und Senden von Zeitschlitzen. Damit kommen am Basisband um ca. 3 Bits verzögert beim Empfang und 3 Bits verzögert beim Senden die Informationen von der Antenne bzw. zu der Antenne. Diese Verzögerung kann durch die Synchronisation des Referenzbitzählers auf eine zeitliche Lage von t + k verglichen mit dem Empfangszeitschlitz RX erreicht werden. Dadurch werden die gewünschten 5 ms eingehalten.

In Figur 2 ist das Kommunikationsprinzip zwischen Basisstation FP, Repeater RP und den Mobilteilen MT gezeigt. Die Mobilteile MT senden und empfangen Signale vom Repeater RP, der wiederum mit der Basisstation FP kommuniziert.

## Patentansprüche

1. Verfahren zur Erhöhung der Reichweite in einem Zeitschlitzverfahren,
- bei dem bidirektional zwischen einer Basisstation (FP) und einem Repeater (RP) Signale übertragen werden,
- bei dem Signale bidirektional zwischen dem Repeater (RP) und einem oder mehreren Mobilteilen (MT) übertragen werden,
- bei dem im Repeater (RP) in einem Rahmen der oder die Sendezeitschlitze (TX) mit Mobilteilfunktionalität (MT) zeitlich verschoben werden,
**dadurch gekennzeichnet, dass**
- bei dem Verfahren die maximale Anzahl t der Bits, um die die Sendezeitschlitze (TX) verschoben werden, bestimmt wird aus der maximal möglichen Verschiebung des letzten Slots im Rahmen zum ersten Slot im nächsten Rahmen, wenn der letzte Slot im Rahmen ein Sende-Slot (TX) im Mobilteilmode (MT) und der erste Slot im nächsten Rahmen ein Sende-Slot (TX) im Basisteilmode (BT) ist.

2. Verfahren nach Anspruch 1,
bei dem in einem Referenzzähler periodisch von einem Anfangswert bis zu einem Endwert gezählt wird und beim Erreichen des Anfangswertes der Sendevorgang im Basisstationsmodus (BS) durchgeführt wird.

3. Verfahren nach Anspruch 2,
bei dem der Referenzzähler durch die Empfangsschlitze (RX) im Mobilteilmode (MT) so synchronisiert wird, daß das erste Bit des empfangenen Zeitschlitzes (RX) bei Bit t + k des Referenzzählers zu liegen kommt, wobei k ein Kompensationswert ist.

4. Verfahren nach Anspruch 3,
bei dem sich der Kompensationswert k aus der Durchlaufzeit des Signals durch eine Hochfrequenzkomponente eines Senders ergibt.

## Claims

1. Method for increasing the range in a timeslot technique,
- in which signals are transmitted bidirectionally between a base station (FP) and a repeater (RP),
- in which signals are transmitted bidirectionally between the repeater (RP) and one or more mobile terminals (MT),
- in which in the repeater (RP) the transmit timeslot(s) (TX) with mobile terminal functionality (MT) is/are shifted in time in a frame,
**characterized in that**
- in the method, the maximum number t of bits by which the transmit timeslots (TX) are shifted is determined from the maximum possible shift of the last slot in the frame to the first slot in the next frame, when the last slot in the frame is a transmit slot (TX) in mobile terminal mode (MT) and the first slot in the next frame is a transmit slot (TX) in base terminal mode (BT).

2. Method according to Claim 1,
in which counting is performed in a reference counter cyclically from a start value to an end value, and the transmit procedure in base station mode (BS) is carried out when the start value is reached.

3. Method according to Claim 2,
in which the reference counter is synchronized by the receive slots (RX) in mobile terminal mode (MT) such that the first bit of the received timeslot (RX) comes to lie at bit t + k of the reference counter, where k is a compensation value.

4. Method according to Claim 3,
in which the compensation value k is obtained from the transfer delay of the signal through a high frequency component of a transmitter.

## Revendications

1. Procédé d'augmentation de la portée dans un procédé à créneaux temporels,
- dans lequel des signaux sont transmis dans les deux sens entre une station de base (FP) et un répéteur (RP),
- dans lequel des signaux sont transmis dans les deux sens entre le répéteur (RP) et une ou plusieurs parties mobiles (MT),
- dans lequel, dans le répéteur (RP), le ou les créneaux temporels d'émission (TX) avec fonctionnalité de partie mobile (MT) sont décalés temporellement dans une trame,
**caractérisé par le fait que**
- dans le procédé, le nombre maximal t des bits correspondant au décalage des créneaux temporels d'émission (TX) est déterminé à partir du décalage maximal possible du dernier créneau temporel dans la trame au premier créneau temporel dans la trame suivante lorsque le dernier créneau temporel dans la trame est un créneau temporel d'émission (TX) dans le mode partie mobile (MT) et le premier créneau temporel dans la trame suivante est un créneau temporel d'émission (TX) dans le mode station de base (BS).

2. Procédé selon la revendication 1,
dans lequel, dans un compteur de référence, on compte périodiquement d'une valeur initiale à une valeur finale et, lorsque la valeur initiale est atteinte, on effectue l'opération d'émission dans le mode station de base (BS).

3. Procédé selon la revendication 2,
dans lequel le compteur de référence est synchronisé par les créneaux temporels de réception (RX) dans le mode partie mobile (MT) de telle sorte que le premier bit du créneau temporel reçu (RX) arrive au bit t + k du compteur de référence, k étant une valeur de compensation.

4. Procédé selon la revendication 3,
dans lequel la valeur de compensation k se déduit du temps de propagation du signal dans un composant à haute fréquence d'un émetteur.
